# EUROPÄISCHE PATENTANMELDUNG

(11) **EP 4 600 614 A1**
(43) Veröffentlichungstag der Anmeldung: **13.08.2025**
(21) Anmeldenummer: 25152457.5
(22) Anmeldetag: 17.01.2025
(51) Int. Cl.: G01D 11/24, G01D 21/00

(54) **SENSOR**

(30) Priorität: 06.02.2024 DE 102024103321
(71) Anmelder: KNORR-BREMSE Systeme für Nutzfahrzeuge GmbH, 80809 München (DE)
(72) Erfinder: HUBER, Christian, 80937 München (DE); WESSELY, Bjoern, 80805 München (DE); ACHARD, Christophe, 81739 München (DE)

(57) **Zusammenfassung**

Es wird ein Sensor (1) für ein Fahrzeug, insbesondere für ein Nutzfahrzeug, offenbart, aufweisend:
ein Gehäuse (11);
- eine Messschnittstelle (2), die zur Erfassung einer Messgröße des Fahrzeugs ausgebildet ist und die dazu ausgebildet ist, die Messgröße beschreibende Rohmessdaten (3) zu generieren;
- ein Verarbeitungsmittel (4), das dazu ausgebildet ist, die Rohmessdaten (3) zu Messdaten (5) zu verarbeiten, wobei
der Sensor (1) mindestens eine Schutzmaßnahme vor unbefugtem Zugriff aufweist Ferner wird ein Fahrzeug offenbart.

## Beschreibung

Die vorliegende Erfindung betrifft einen Sensor zur Erfassung einer Messgröße eines Fahrzeugs. Weiter betrifft die Erfindung ein Fahrzeug.

Die fortschreitende Digitalisierung bei Fahrzeugen bringt diverse Vorteile mit sich. Vor allem sind damit Sicherheitsfunktionen wie die elektronische Stabilitätskontrolle oder die Umsetzung von Bremsregelungen möglich geworden. Zudem wurde ermöglicht, bestehende Funktionen wie eine Niveauregulierung oder eine Ölstandsmessung zu vereinfachen. Um derartige Funktionen auch bei bestehenden Fahrzeugen aktualisieren zu können, um bspw. Fehler in der Software zu korrigieren oder einfach einen neuen Softwarestand aufzuspielen, ist es nötig, die Soft- und/oder Hardwarearchitektur des Fahrzeugs durch entsprechend ausgebildete Schnittstellen nach außen zu öffnen, so dass ein entsprechender Zugriff möglich ist.

Diese Schnittstellen und auch Datenleitungen, die nicht als Schnittstellen gedacht sind, aber beispielsweise drahtlos oder durch nachträglich eingelötete Verbindungen einen Zugriff ermöglichen, bieten jedoch auch die Möglichkeit, für unbefugten Zugriff auf das digitale System Fahrzeug oder zumindest auf Teilsysteme davon, wie die elektronische Stabilitätskontrolle, die Bremsregelungen oder anderen der oben genannten Funktionen. Maßnahmen zur Erhöhung der Schwelle gegen solche unbefugten Zugriffe sollen nachfolgend als "Maßnahmen zur Erhöhung der Cybersicherheit" bezeichnet werden, wobei die "Cybersicherheit" als solche die Schwelle gegen solche unbefugten Zugriffe beschreibt.

Die Cybersicherheit bzw. deren Erhöhung wird bereits von der Gesetzgebung berücksichtigt. Bspw. gibt es Regelungen zur Sicherheit von Fahrzeugen gegen Cyber-Angriffe (z.B. UNECE R 155) und Regelungen, die Voraussetzungen zum Update von Software in Steuergeräten von Fahrzeugen beschreiben (UNECE R 156). Gerade die letztgenannte Regelung bezieht sich auf die Bereitstellung von Software Update Management Systemen (SUMS) von Fahrzeugherstellern. Ein SUMS soll sicherstellen, dass ein Update von Software-Funktionen, die für die Typgenehmigung relevant waren (bspw. Abgas, Bremsen, Motorsteuerung), so entwickelt und validiert werden, dass sie auch nach dem Update noch gesetzeskonform arbeiten. Die UNECE R 156 fordert darüber hinaus, dass solche Updates "safe and secure" sind, ohne dies weiter auszuführen. Der Begriff "safe" betrifft die Sicherheit gegen Fehlfunktionen der Software selbst (Bugs). Der Begriff "secure" betrifft die Manipulationssicherheit beim Update-Prozess. So soll beispielsweise der Update-Mechanismus das Einspielen von Schadsoftware wie auch von Tuning-Software verhindern. Beides stellt einen unbefugten Zugriff dar.

Die Aufgabe der vorliegenden Erfindung ist es daher, Maßnahmen aufzuzeigen, um die Cybersicherheit speziell bei Sensoren zu erhöhen.

Diese Aufgabe wird durch die Gegenstände der unabhängigen Ansprüche gelöst. Vorteilhafte Weiterbildungen sind Gegenstand der abhängigen Ansprüche.

Es wird ein Sensor für ein Fahrzeug, insbesondere für ein Nutzfahrzeug, offenbart. Der Sensor weist die folgenden Elemente auf:
- ein Gehäuse;
- eine Messschnittstelle, die zur Erfassung einer Messgröße des Fahrzeugs ausgebildet ist und die dazu ausgebildet ist, die Messgröße beschreibende Rohmessdaten zu generieren;
- ein Verarbeitungsmittel, das dazu ausgebildet ist, die Rohmessdaten zu Messdaten zu verarbeiten.

Vorzugsweise weist der Sensor weiter die folgenden Elemente auf:
- eine Datenschnittstelle, die zum Datenaustausch des Sensors mit anderen Sendern oder Empfängern ausgebildet ist und für diesen Datenaustausch mit dem Verarbeitungsmittel in Verbindung steht;
- einen Speicherabschnitt, der dazu ausgebildet ist, mindestens einen kryptographischen Schlüssel zu speichern und ausschließlich an das Verarbeitungsmittel zur Verfügung zu stellen, wobei

das Verarbeitungsmittel dazu ausgebildet ist, den mindestens einen Schlüssel zur Verschlüsselung, Entschlüsselung oder Validierung von Daten zu nutzen, die über die Datenschnittstelle gesendet oder empfangen werden, wobei
der Speicherabschnitt als oder in einem Hardware-Sicherheitsmodul ausgebildet ist.

Mit dem Vorsehen des mindestens einen Schlüssels in einem als Speicherabschnitt vorgesehenen Hardware-Sicherheitsmodul ist der Vorteil verbunden, dass der mindestens eine Schlüssel damit gegen unbefugten Zugriff geschützt ist. Ohne entsprechenden Gegenpart kann durch den mindestens einen Schlüssel verhindert werden, dass Daten wie Messdaten, Rohmessdaten oder Software des Sensors unbefugt ausgelesen oder verändert werden.

Das Hardware-Sicherheitsmodul kann insbesondere durch eine SHE (Secure Hardware Extension) oder durch den Evita light, medium oder full Standard umgesetzt sein.

Durch das Hardware-Sicherheitsmodul ist eine Möglichkeit geschaffen, Verschlüsselungsfunktionen zum Datenaustausch, insbesondere über die Datenschnittstelle des Sensors zu realisieren.

Der Speicherabschnitt kann als von dem Verarbeitungsmittel baulich getrennter Speicher ausgebildet sein. Er kann dadurch relativ frei im Gehäuse des Sensors platziert werden.

Alternativ kann vorgesehen sein, dass der Speicherabschnitt und das Verarbeitungsmittel als bauliche Einheit ausgebildet sind. Auf diese Weise wird ein komplettes Modul zur Verfügung gestellt, das den Einbau in das Sensorgehäuse erleichtert. Das Verarbeitungsmittel kann zumindest teilweise, vorzugsweise vollständig als Teil des Hardware-Sicherheitsmoduls ausgebildet sein. Auf diese Weise sind wesentliche Funktionen des Sensors, die mit dem Verarbeitungsmittel realisiert werden, geschützt.

Vorzugsweise sind die Daten, die über die Datenschnittstelle empfangen werden, Applikationsdaten oder Programmcode oder sie enthalten Applikationsdaten oder Programmcode. Auf diese Weise ist es möglich, den Sensor zu aktualisieren. Das Verarbeitungsmittel ist vorzugswiese dazu ausgebildet, Daten, die über die Datenschnittstelle empfangen werden, zu validieren. Dazu enthalten die Daten vorzugsweise einen kryptografischen Schlüssel, einen Hash-Wert oder eine kryptografische Signatur. Diese können mit einem im Speicherabschnitt gespeicherten kryptografischen Schlüssel, Hash-Wert oder mit einer kryptografischen Signatur durch das Verarbeitungsmittel abgeglichen werden. Ergibt der Abgleich, dass der Schlüssel, der Hash-Wert oder die kryptografische Signatur, der Daten von dem Verarbeitungsmittel erwartet wird, bewertet das Verarbeitungsmittel die Empfangenen Daten als korrekt und vertrauenswürdig und leitet eine entsprechende Aktion ein, wie ein Einspielen oder eine Übernahme der Applikationsdaten oder ein Aktualisieren der Software des Sensors.

Vorzugsweise sind die Daten, die über die Datenschnittstelle versandt werden, die Messdaten oder Statusinformationen des Sensors oder sie enthalten die Messdaten oder die Statusinformationen. Dabei ist der Sensor, vorzugsweise das Verarbeitungsmittel, dazu ausgebildet, die versandten Daten mit einem kryptografischen Schlüssel, einem Hash-Wert oder einer kryptografische Signatur aus dem Hardware-Sicherheitsmodul, insbesondere aus dem Speicherabschnitt, zu versehen, damit andere Empfänger ihrerseits einen entsprechenden Abgleich der Schlüssel vornehmen können, um sicherzustellen, dass dem Sensor als Datenquelle vertraut werden kann und dass die versandten Daten korrekt sind.

Dies kann im Rahmen einer sicheren Onboardkommunikation (Secure Onboard Communication, SecOC) umgesetzt sein, so dass die Kommunikation des Sensors mit weiteren Empfängern sicher erfolgen kann.

Vorzugsweise ist der mindestens eine Schlüssel mit einem Identifikationskennzeichen des Sensors und/oder mit einem herstellerspezifischen Identifikationskennzeichen und/oder mit einem kundenspezifischen Identifikationskennzeichen verknüpft. Auf diese Weise kann durch ein entsprechend ausgebildetes System, wie es beispielsweise weiter unten beschrieben wird, in dem der Sensor verbaut ist, geprüft werden, ob der Sensor ein für das System erwünschter oder vorgesehener Sensor ist. Auf diese Weise kann erreicht werden, dass unsachgemäße Kopien oder nicht zugelassene Bauformen des Sensors erkannt werden. Es kann dann auch vorgesehen sein, dass ein System den Sensor nicht weiterverwendet. Weitere Maßnahmen, die für ein entsprechendes System in Frage kommen, sind weiter unten erläutert.

Die Prüfung, ob der Sensor ein für das System erwünschter oder vorgesehener Sensor ist, kann alternativ oder zusätzlich auch im Rahmen eines Verfahrens zur Prüfung der Zulässigkeit einer Kombination eines solchen Systems für ein Fahrzeug mit einem solchen Sensor erfolgen. Ein solches Verfahren ist beispielsweise weiter unten erläutert. Auf diese Weise ist es möglich, bereits bei oder vor der Montage von Sensor und System eine entsprechende Prüfung durchzuführen. Somit kann die Prüfung bereits in einem frühen Stadium des Herstellungsprozesses, beispielsweise bei einem Zulieferbetrieb, der die Kombination von System und Sensor herstellt oder montiert, erfolgen. Dafür können dem Zulieferer beispielsweise von einem Auftraggeber, wie einem Fahrzeughersteller, oder einem Lieferanten die benötigten Schlüssel und weiteren Informationen zur Verfügung gestellt werden.

Vorzugsweise ist das Identifikationskennzeichen des Sensors eine Teile- und/oder Seriennummer und/oder eine Fahrzeugidentifikationsnummer und/oder eine ECU-ID und/oder eine Herstellerbezeichnung. Diese werden von Herstellern bei der Produktion der Sensoren oder später im Rahmen der Fahrzeugherstellung oder Montage eindeutig den Sensoren zugeordnet. Damit ist eine Identifikation eines zugelassenen Sensors über diese Nummern möglich bzw. es ist auch möglich, einen nicht zugelassenen Sensor anhand von Fehlern in diesen Nummern zu erkennen. Insbesondere ist eine Zuordnung eines Sensors zu einem bestimmten Fahrzeug oder zu einem bestimmten System, wie einem Brems- oder Fahrdynamikregelsystem, möglich.

Vorzugsweise ist der Speicherabschnitt dazu ausgebildet, Programmteile des Verarbeitungsmittels und/oder die Rohmessdaten und/oder die Messdaten im Speicherabschnitt abzulegen, die mittels des mindestens einen Schlüssels autorisiert wurden. Auf diese Weise können derartige Informationen geschützt werden und ohne den entsprechenden kryptographischen Schlüssel nicht verwendet werden. Ein unbefugter Zugriff wird damit verhindert.

Vorzugsweise ist der Sensor, insbesondere das Verarbeitungsmittel, dazu ausgebildet, Daten, die ihrerseits mit einem kryptographischen Schlüssel versehen sind und die über die Schnittstelle empfangen werden, oder an den Sensor gerichtete Kommunikation, die über die Schnittstelle empfangen wird, auf die Vertrauenswürdigkeit ihres Senders hin zu prüfen. Vorzugsweise ist der Sensor, insbesondere das Verarbeitungsmittel, weiter dazu ausgebildet, eine Meldung über die Schnittstelle auszugeben oder sich oder ein System, in dem der Sensor vorgesehen ist, zu deaktivieren oder sich in einen sicheren Zustand zu versetzen, wenn der Sendeursprung oder die empfangenen Daten oder die an den Sensor gerichtete Kommunikation als nicht vertrauenswürdig eingestuft wurde. Dadurch kann verhindert werden, dass unerwünschte Applikationsdaten oder unerwünschter Programmcode durch den Sensor, insbesondere durch das Verarbeitungsmittel verwendet werden.

Nachfolgend werden Möglichkeiten beschrieben, den Sensor baulich gegen unerwünschten oder unbefugten Zugriff von außen, insbesondere gegen unerwünschten drahtlosen Zugriff von außen zu schützen. Dies kann in Kombination mit den oben beschriebenen Ausführungsformen des Sensors erfolgen oder davon unabhängig. Als gemeinsames Element sowohl der oben als auch der nachfolgend beschriebenen Sensoren ist folgender Sensor zu verstehen, der bereits oben einführend beschrieben wurde:
Es wird ein Sensor für ein Fahrzeug offenbart. Der Sensor weist die folgenden Elemente auf:
- ein Gehäuse;
- eine Messschnittstelle, die zur Erfassung einer Messgröße des Fahrzeugs ausgebildet ist und die dazu ausgebildet ist, die Messgröße beschreibende Rohmessdaten zu generieren;
- ein Verarbeitungsmittel, das dazu ausgebildet ist, die Rohmessdaten zu Messdaten zu verarbeiten.

Vorzugsweise ist der Sensor, insbesondere baulich, vor unbefugtem Zugriff geschützt.

Vorzugsweise weist der Sensor mindestens eine, insbesondere bauliche, Schutzmaßnahme vor unbefugtem Zugriff auf.

Vorzugsweise ist zumindest ein Teilbereich oder der gesamte Sensor baulich vor, insbesondere unbefugtem, drahtlosen Zugriff abgeschirmt. Dazu weist zumindest der Teilbereich oder der gesamte Sensor als bauliche Schutzmaßnahme eine Abschirmung vor drahtlosem Zugriff auf. Unter drahtlosem Zugriff kann induktiver, kapazitiver und/oder optischer Zugriff verstanden werden. Dabei ist es vorteilhaft, wenn eine entsprechende Abschirmung vorgesehen ist, die elektromagnetische Felder, die durch elektrische Ströme innerhalb des Sensors, entstehen nach außen abgeschirmt werden, so dass kein Zugriff auf sensorinterne Daten von außen erfolgen kann. Ebenso ist es vorteilhaft, wenn die Abschirmung einen Zugriff über elektromagnetische Felder von außen verhindert. Auf diese Weise sind unbefugte Zugriffe auf sensorinterne Daten bis hin zu deren Manipulation ausgeschlossen. Eine Abschirmung vor optischem Zugriff kann insbesondere die Messschnittstelle betreffen, die dazu ausgebildet sein kann, die Messgröße optisch zu erfassen. Auf diese Weise kann durch entsprechende Platzierung von Abschirmelementen verhindert werden, dass die Erfassung der Messgröße durch Licht- oder Strahlungseinwirkung verfälscht wird. Auch kann durch eine entsprechende Abschirmung verhindert werden, dass lichtempfindliche Sensorbauteile wie Chips, Halbleiter, Widerstände oder Dioden beschädigt werden.

Vorzugsweise ist die Abschirmung des Teilbereichs durch Abschirmelemente realisiert, die innerhalb des Gehäuses des Sensors oder in oder auf einer oder mehreren Wänden des Gehäuses vorgesehen sind. Diese können aus einer speziellen Legierung hergestellt sein, die elektromagnetische Felder ausreichend abschirmt. Die Abschirmelemente sind vorzugsweise so platziert, dass Stellen, an denen entsprechende drahtlose Kopplungselemente angebracht werden können, vollständig oder zumindest teilweise und in ausreichendem Maße abgeschirmt werden. Ist das Gehäuse aus Kunststoff, so können die Abschirmelementen in das Kunststoffmaterial des Gehäuses eingegossen sein. Ist ein Abschirmelement auf eine Wand des Gehäuses (Innen- oder Außenwand) aufgebracht, so kann dies insbesondere durch Kleben oder durch Stecken oder durch Klemmen erfolgen. Alternativ kann das Gehäuse des Sensors aus den Abschirmelementen bestehen. Dies ermöglicht dann eine vollständige Abschirmung zu allen Seiten. Sind Abschirmelemente innerhalb des Gehäuses vorgesehen, so können sie vorzugsweise eine Kapselung des Teilbereichs ausbilden, so dass dann besonders bevorzugt ein Gehäuse im Gehäuse vorliegt.

Alternativ oder zusätzlich kann vorgesehen sein, dass die Abschirmung des Teilbereichs durch einen mehrschichtigen Aufbau des Sensors realisiert ist und der abzuschirmende Teilbereich durch über diesem Teilbereich angeordnete Schichten weiterer Bestandteile des Sensors oder durch entsprechend angeordnete Abschirmelemente abgeschirmt ist. Insbesondre kann vorgesehen sein, dass der Sensor im Gehäuse einen mehrschichtigen PCB-Aufbau (Printed Circuit Board - Aufbau) aufweist. Dabei können bestimmte abzuschirmende Leitungen oder Elemente, wie Kommunikationsleitungen oder Debug-Leitungen, durch andere darüber gedruckte bzw. darüber angeordnete und davon isolierte Elemente wie Stromversorgungsleitungen, abgeschirmt werden.

Es ist auch möglich, einen Schichtaufbau gebildet durch mehrere Leiterplatten vorzusehen. Dabei können abzuschirmende Leiterplatten so platziert werden, dass sie gegenüber den nächstliegenden Gehäusewänden durch andere Leiterplatten verdeckt sind. Zudem können in den Schichtaufbau ebenfalls Abschirmelemente, vorzugsweise in Plattenform, eingebracht werden.

Vorzugsweise ist der Sensor, insbesondere als bauliche Schutzmaßnahme, dazu ausgebildet, sich zu deaktivieren, wenn das Gehäuse unbefugt geöffnet wird. Dies kann zerstörungsfrei erfolgen, so dass der Sensor wieder verwendet werden kann, wenn er, beispielsweise durch Verwendung eines oder mehrerer dafür vorgesehener kryptografischer Schlüssel, wieder aktiviert wird. Es kann aber auch vorgesehen sein, dass sich der Sensor dauerhaft deaktiviert indem er sich zerstört. Dies kann beispielsweise durch ein gezieltes Überlasten eines Schaltkreises des Sensors erfolgen. Das Öffnen des Gehäuses kann durch Detektionsmittel, wie Sensoren, am Gehäuse detektiert werden, die ein Signal ausgeben, sobald das Gehäuse geöffnet wird. Es kann vorgesehen sein, dass ein Öffnen des Gehäuses zugelassen ist, wenn über die Datenschnittstelle die entsprechende Freischaltung durch den Sensor empfangen wird. Dabei kann dies wieder durch im Speicherabschnitt abgelegte Schlüssel verifiziert werden. Das Detektionsmittel ist vorzugsweise am Gehäuse vorgesehen und dazu ausgebildet, das Öffnen des Gehäuses zu detektieren. Der Sensor kann dazu ausgebildet sein, dass ein durch das Detektionsmittel bei geöffnetem Gehäuse ein entsprechendes Signal an das Verarbeitungsmittel oder an einen anderen Empfänger außerhalb des Sensors, bspw. über dessen Schnittstelle, ausgegeben wird.

Vorzugsweise ist der Sensor ein Winkelsensor und die über die Messschnittstelle erfasste Messgröße eine eine Drehbewegung eines drehbar vorgesehenen Elements beschreibende Messgröße. Das drehbar vorgesehene Element kann insbesondere eine Lenksäule oder ein Element einer Fahrzeuglenkung aus dessen Drehbewegung ein Lenkwinkel ermittelt werden kann, sein. In diesem Fall ist der Sensor als Lenkwinkelsensor ausgebildet.

Vorzugsweise ist der Sensor ein Drehratensensor. Vorzugsweise ist die über die Messschnittstelle erfasste Messgröße eine Gierrate eines Fahrzeugs, in dem der Sensor vorgesehen ist. In diesem Fall ist der Sensor als Gierratensensor ausgebildet. Alternativ oder zusätzlich kann auch vorgesehen sein, dass die über die Messschnittstelle erfasste Messgröße eine Nickrate und/oder eine Rollrate des Fahrzeugs ist.

Vorzugsweise ist der Sensor ein Beschleunigungssensor, wobei die über die Messschnittstelle erfasste Messgröße eine Beschleunigung eines Fahrzeugs ist, in dem der Sensor vorgesehen ist. Dabei kann der Beschleunigungssensor ein- oder mehrachsig ausgebildet sein, so dass er eine Beschleunigung in nur einer Achsenrichtung (Längs-, Quer- oder Hochachse des Fahrzeugs) oder in mehreren oder allen drei Achsenrichtungen erfassen kann.

Vorzugsweise ist der Sensor als Kombination eines vorstehend beschriebenen Drehratensensors und eines vorstehend beschriebenen Beschleunigungssensors ausgebildet. Insbesondere kann der Sensor ausgebildet sein, sowohl Gier-, Nick-, und Rollrate als auch die Beschleunigungen in allen drei Achsenrichtungen zu erfassen.

Vorzugsweise ist der Sensor ein Drucksensor, wobei die über die Messschnittstelle erfasste Messgröße ein Druck ist. Der Sensor kann insbesondere ein Bremsdrucksensor sein. Somit ist eine sichere Erfassung eines Bremsdrucks bei fluidisch aktuierten Bremsen wie pneumatischen oder hydraulischen Bremsen möglich.

Vorzugsweise ist der Sensor ein Kraftsensor, wobei die über die Messschnittstelle erfasste Messgröße eine Kraft ist. Der Sensor kann insbesondere ein Bremskraftsensor sein. Somit ist eine sichere Erfassung einer Bremskraft bei fluidisch aktuierten Bremsen wie pneumatischen oder hydraulischen Bremsen aber auch bei elektromechanisch aktuierten Bremsen möglich. Die erfasste Kraft kann insbesondere eine Zuspannkraft einer Reibbremse sein.

Vorzugsweise ist der Sensor ein Drehzahlsensor, wobei die über die Messschnittstelle erfasste Messgröße eine Drehzahl ist. Dies kann eine Raddrehzahl oder eine Motordrehzahl sein. Insbesondere kann es sich um einen aktiven Drehzahlsensor handeln.

Vorzugsweise ist der Sensor ein Positionssensor, wobei die über die Messschnittstelle erfasste Messgröße insbesondere eine Position eines beweglichen Elements ist. Das bewegliche Element ist beispielsweise ein Schaltelement eines Getriebes oder ein Betätigungselement zur Betätigung einer Kupplung. Auf diese Weise ist eine sichere Erfassung einer Schaltstellung in einem Getriebe oder einer Kupplungsstellung möglich.

Vorzugsweise ist der Sensor ein Niveausensor, wobei die über die Messschnittstelle erfasste Messgröße ein Niveau einer Fahrzeugkarosserie eines Fahrzeugs ist, in dem der Sensor vorgesehen ist. Dies ermöglicht eine Verbesserung der Sicherheit der Niveauregulierung eines solchen Fahrzeugs.

Vorzugsweise ist der Sensor ein Ölstandssensor, wobei die über die Messschnittstelle erfasste Messgröße ein Ölstand ist. Dies kann ein Ölstand eines elektrisch angetriebenen Kompressors sein.

Vorzugsweise ist der Sensor dazu ausgebildet ist, zu erkennen, ob eine unbefugte Datenverbindung zu dem Sensor aufgebaut ist oder wird. Dies kann durch entsprechende Verwendung eines kryptografischen Schlüssels aus dem Speicherabschnitt oder durch einen durch das Verarbeitungsmittel generierten Hash-Wert oder eine kryptografische Signatur verifiziert werden. Der Sensor ist vorzugsweise dazu ausgebildet, bei festgestelltem unbefugter Datenverbindung, sich zu deaktivieren oder in einen sicheren Zustand zu versetzen oder die Datenverbindung zu unterbrechen. Die Datenverbindung kann CAN-basiert sein.

Offenbart wird ein System, insbesondere ein Steuersystem, Regelsystem oder Überwachungssystem für ein Fahrzeug, insbesondere für ein Nutzfahrzeug, mit einem Sensor wie oben beschrieben. Das System ist dazu ausgebildet, über einen Abgleich mindestens eines kryptografischen Schlüssels des Sensors mit mindestens einem kryptografischen Schlüssel des Systems festzustellen, ob der Sensor zur Verwendung in dem System zugelassen ist.

Vorzugsweise ist das System weiter dazu ausgebildet, bei Feststellen eines nicht zugelassenen Sensors durch das System, den Sensor außer Betrieb zu nehmen, eine Meldung auszugeben oder das System zu deaktivieren oder in einen sicheren Zustand zu überführen.

Auf diese Weise wird verhindert, dass ein für das System nicht zugelassener Sensor in dem System verwendet wird.

Das System ist vorzugsweise als Lenkungssteuersystem ausgebildet, beispielsweises mit dem als Winkelsensor ausgebildeten Sensor. Es kann alternativ als Fahrdynamikregelsystem ausgebildet sein, beispielsweise mit dem als Winkelsensor, Drehratensensor, Beschleunigungssensor, Drucksensor, Kraftsensor und/oder Drehzahlsensor ausgebildeten Sensor. Es kann alternativ als Niveauregelsystem ausgebildet sein, beispielsweise mit dem als Niveausensor ausgebildeten Sensor.

Offenbart wird ein Fahrzeug, insbesondere ein Nutzfahrzeug, mit einem Sensor wie oben beschrieben oder mit einem System wie oben beschrieben.

Offenbart wird ein Verfahren zur Prüfung der Zulässigkeit einer Kombination eines Systems, insbesondere eines Steuersystems, eines Regelsystems oder eines Überwachungssystems, für ein Fahrzeug mit einem Sensor wie oben beschrieben, wobei das Verfahren folgende Schritte aufweist:
- Bereitstellen des Systems, insbesondere eines oben beschriebenen Systems, wobei das System kryptographische Schlüssel aufweist;
- Bereitstellen des Sensors wie oben beschrieben;
- Abgleichen von mindestens einem kryptografischen Schlüssel des Sensors mit mindestens einem kryptografischen Schlüssel des Systems;
- Freigeben des Systems mit dem Sensor, wenn über den Abgleich festgestellt wird, dass der Sensor für das System zugelassen ist.

Auf diese Weise wird ermöglicht, bereits bei der Montage, bei der erstmals System und Sensor zusammengefügt werden, festzustellen, ob ein für das System zugelassener Sensor verwendet wird. Auch später, bei einem Tausch des Sensors aufgrund von Wartungs- oder Reparaturarbeiten kann eine derartige Prüfung erfolgen.

Nachfolgend wird die Erfindung unter Bezugnahme auf die beigefügten Zeichnungen näher beschrieben.
Fig. 1 zeigt einen Sensor nach einer ersten Ausführungsform.
Fig. 2 zeigt einen Sensor nach einer zweiten Ausführungsform.

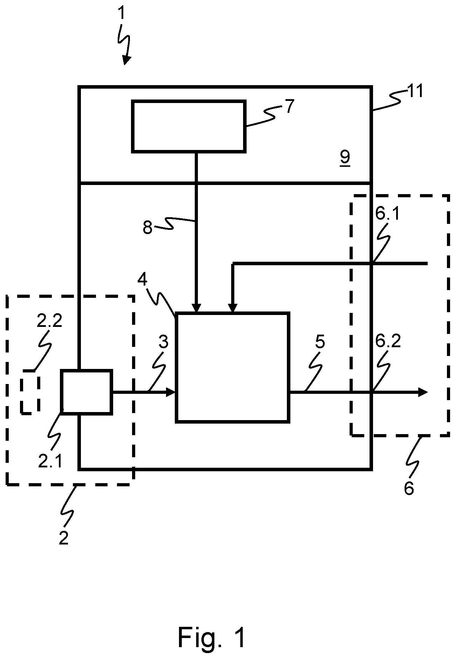

**Fig. 1** zeigt einen Sensor 1 nach einer ersten Ausführungsform.

Es ist ein Sensor 1 für ein Fahrzeug gezeigt Der Sensor 1 weist folgende Elemente auf:
- ein Gehäuse 11;
- eine Messschnittstelle 2, die zur Erfassung einer Messgröße des Fahrzeugs ausgebildet ist und die dazu ausgebildet ist, die Messgröße beschreibende Rohmessdaten 3 zu generieren;
- ein Verarbeitungsmittel 4, das dazu ausgebildet ist, die Rohmessdaten 3 zu Messdaten 5 zu verarbeiten;
- eine Datenschnittstelle 6, die zum Datenaustausch des Sensors 1 mit anderen Sendern oder Empfängern ausgebildet ist und für diesen Datenaustausch mit dem Verarbeitungsmittel 4 in Verbindung steht;
- einen Speicherabschnitt 7, der dazu ausgebildet ist, mindestens einen kryptographischen Schlüssel zu speichern und ausschließlich an das Verarbeitungsmittel 4 zur Verfügung zu stellen, wobei

das Verarbeitungsmittel 4 dazu ausgebildet ist, den mindestens einen Schlüssel zur Verschlüsselung, Entschlüsselung oder Validierung von Daten zu nutzen, die über die Datenschnittstelle 6 gesendet oder empfangen werden, wobei
der Speicherabschnitt 7 als oder in einem Hardware-Sicherheitsmodul ausgebildet ist.

Der Schlüssel kann über eine gezeigte Datenverbindung 8 an das Verarbeitungsmittel 4 geschickt werden.

Die Messchnittstelle 2 weist ein Erfassungsmittel 2.1 auf, das zur Erfassung der Rohmessdaten 3 ausgebildet ist. Das Erfassungsmittel 2.1 kann insbesondere zur Erfassung einer Beschleunigung, einer Drehrate, eines Drucks, einer Kraft oder eines Ölstands ausgebildet sein. Ist ein entsprechendes Gegenstück 2.2 vorhanden, das beispielsweise eine Relativbewegung (eine Drehbewegung oder translatorische Bewegung) gegenüber dem Erfassungsmittel 2.1 durchführen kann, so kann das Erfassungsmittel 2.1 zur Erfassung einer Drehbewegung oder eines Winkels, einer Verschiebung, wie bei einer Niveauveränderung oder wie bei der Erfassung einer Position eines beweglichen Elements, ausgebildet sein.

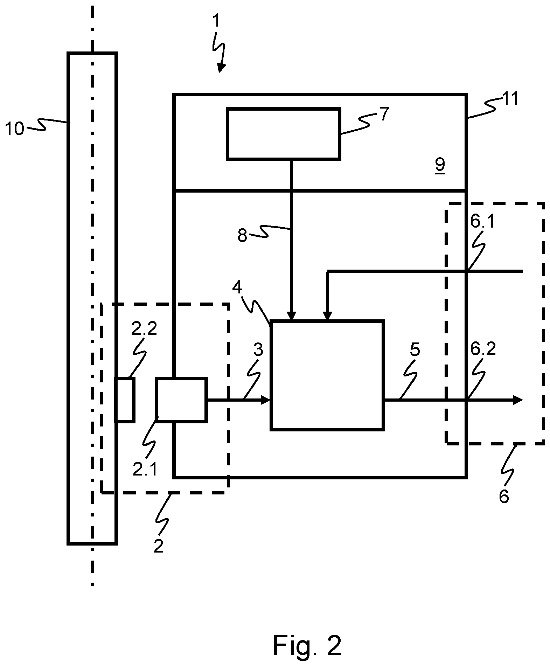

**Fig. 2** zeigt einen Sensor 1 nach einer zweiten Ausführungsform.

Es ist ein Sensor 1, insbesondere zur Erfassung eines Lenkwinkels eines Fahrzeugs, gezeigt. Der Sensor 1 weist die folgenden Elemente auf:
- ein Gehäuse 11;
- eine Messschnittstelle 2, die zur Erfassung einer Drehbewegung eines drehbar vorgesehenen Elements 10 des Fahrzeugs ausgebildet ist und die dazu ausgebildet ist, die Drehbewegung beschreibende Rohmessdaten 3 zu generieren;
- ein Verarbeitungsmittel 4, das dazu ausgebildet ist, die Rohmessdaten 3 zu Messdaten 5 zu verarbeiten.

Das drehbar vorgesehene Element 10 ist hier als Lenksäule eines Fahrzeugs ausgebildet. Diese ist um die senkrechte strichpunktierte Achse drehbar vorgesehen.

Die Messchnittstelle 2 weist ein Erfassungsmittel 2.1 und ein Gegenstück 2.2 auf, wobei das Gegenstück 2.2 mit dem Element 10 verbunden ist und die Drehbewegung mit ausführt. Dies wird von dem Erfassungsmittel 2.1 erfasst und als Rohmessdaten 3 an das Verarbeitungsmittel 4 weitergegeben. Die Messchnittstelle 2 ist hier lediglich exemplarisch gezeigt. Es können auch weiter Bauformen vorgesehen sein. Beispielsweise kann die Messchnittstelle 2 ein Ringelement aufweisen, das koaxial und drehfest zu der Achse des Elements 10 angeordnet ist, wobei dessen Drehbewegung von dem Erfassungsmittel 2.1 detektiert wird.

Weiter weist der Sensor 1 die folgenden Elemente auf:
- eine Datenschnittstelle 6, die zum Datenaustausch des Sensors 1 mit anderen Sendern oder Empfängern ausgebildet ist und für diesen Datenaustausch mit dem Verarbeitungsmittel 4 in Verbindung steht;
- einen Speicherabschnitt 7, der dazu ausgebildet ist, mindestens einen kryptographischen Schlüssel zu speichern und ausschließlich an das Verarbeitungsmittel 4 zur Verfügung zu stellen, wobei

das Verarbeitungsmittel 4 dazu ausgebildet ist, diesen mindestens einen Schlüssel zur Verschlüsselung, Entschlüsselung oder Validierung von Daten zu nutzen, die über die Datenschnittstelle 6 gesendet oder empfangen werden, wobei
der Speicherabschnitt 7 als oder in einem Hardware-Sicherheitsmodul ausgebildet ist.

Nachfolgende Beschreibung gilt sowohl für die in Fig. 1 als auch für die in Fig. 2 dargestellten Ausführungsformen.

Der Speicherabschnitt 7 ist hier getrennt von dem Verarbeitungsmittel 4 in einem Teilbereich 9 vorgesehen, der eine Abschirmung (nicht gezeigt) gegen drahtlosen Zugriff wie oben beschrieben aufweist.

Die Datenschnittstelle 6 weist einen Empfangsabschnitt 6.1 auf, über den Applikationsdaten oder Programmcode an den Sensor 1 geschickt werden können, so dass insbesondere das Verarbeitungsmittel 4 aktualisiert und gewartet werden kann.

Die Datenschnittstelle 6 weist einen Messdatenabschnitt 6.2 auf, über den die Messdaten 5 und Statusinformationen des Sensors 1 verschickt werden können.

Der Speicherabschnitt 7 ermöglicht eine sichere Speicherung des mindestens einen kryptografischen Schlüssels, wobei er zusätzlich gegen einen drahtlosen Zugriff von außen im Teilbereich 9 des Gehäuses 11 abgeschirmt ist. Dieser Teilbereich kann entsprechend ausgebildete Legierungen in oder auf den Wänden des Gehäuses 11 aufweisen.

Gemäß einer weiteren nicht gezeigten Ausführungsform ist das Verarbeitungsmittel 4 teilweise, vorzugsweise vollständig im Teilbereich 9 des Gehäuses 11 vorgesehen, um wesentliche Funktionen des Sensors 1, die durch das Verarbeitungsmittel 4 realisiert sind, zu schützen.

Die in den Figuren 1 und 2 gezeigten Sensoren können als Schutzmaßnahme vor unbefugtem Zugriff so ausgebildet sein, dass sie sich wie oben beschrieben deaktivieren, wenn das Gehäuse 11 unbefugt geöffnet wird. Dies kann zerstörungsfrei erfolgen, so dass der Sensor 1 wieder verwendet werden kann, wenn er, beispielsweise durch Verwendung eines oder mehrerer dafür vorgesehener kryptografischer Schlüssel, wieder aktiviert wird. Es kann aber auch vorgesehen sein, dass sich der Sensor 1 dauerhaft deaktiviert indem er sich zerstört. Dies kann beispielsweise durch ein gezieltes Überlasten eines Schaltkreises des Sensors 1 erfolgen.

### BEZUGSZEICHENLISTE

- 1: Sensor
- 2: Messschnittstelle
- 2.1: Erfassungsmittel
- 2.2: Gegenstück
- 3: Rohmessdaten
- 4: Verarbeitungsmittel
- 5: Messdaten
- 6: Datenschnittstelle
- 6.1: Empfangsabschnitt
- 6.2: Messdatenabschnitt
- 7: Speicherabschnitt
- 8: Datenverbindung
- 9: Teilbereich
- 10: drehbar vorgesehenes Element
- 11: Gehäuse

## Patentansprüche

1. Sensor (1) für ein Fahrzeug, insbesondere für ein Nutzfahrzeug, aufweisend:
- ein Gehäuse (11);
- eine Messschnittstelle (2), die zur Erfassung einer Messgröße des Fahrzeugs ausgebildet ist und die dazu ausgebildet ist, die Messgröße beschreibende Rohmessdaten (3) zu generieren;
- ein Verarbeitungsmittel (4), das dazu ausgebildet ist, die Rohmessdaten (3) zu Messdaten (5) zu verarbeiten, wobei
der Sensor (1) mindestens eine Schutzmaßnahme vor unbefugtem Zugriff aufweist.

2. Sensor (1) nach einem der vorstehenden Ansprüche, wobei
zumindest ein Teilbereich (9) oder der gesamte Sensor (1) als bauliche Schutzmaßnahme eine Abschirmung vor drahtlosem Zugriff aufweist.

3. Sensor (1) nach Anspruch 2, wobei
die Abschirmung des Teilbereichs (9) durch Abschirmelemente realisiert ist, die innerhalb des Gehäuses des Sensors (1) oder in oder auf einer oder mehreren Wänden des Gehäuses (11) vorgesehen sind, oder wobei
das Gehäuse des Sensors (1) aus den Abschirmelementen besteht.

4. Sensor (1) nach Anspruch 2 oder 3, wobei
die Abschirmung des Teilbereichs (9) durch einen mehrschichtigen Aufbau des Sensors (1) realisiert ist und der abzuschirmende Teilbereich (9) durch über diesem Teilbereich angeordnete Schichten weiterer Bestandteile des Sensors (1) oder durch entsprechend angeordnete Abschirmelemente abgeschirmt ist.

5. Sensor (1) nach einem der vorstehenden Ansprüche,
wobei der Sensor (1) dazu ausgebildet ist, sich zu deaktivieren, wenn das Gehäuse (11) unbefugt geöffnet wird.

6. Sensor (1) nach Anspruch 5, wobei
der Sensor (1) dazu ausgebildet ist, sich bei unbefugt geöffnetem Gehäuse (11) zerstörungsfrei zu deaktivieren.

7. Sensor (1) nach Anspruch 6, wobei
der Sensor (1) dazu ausgebildet ist, nach Deaktivierung durch einen oder mehrere dafür vorgesehene kryptographische Schlüssel (8) wieder aktiviert zu werden.

8. Sensor (1) nach Anspruch 5, wobei
der Sensor (1) dazu ausgebildet ist, sich bei unbefugt geöffnetem Gehäuse (11) dauerhaft durch Zerstörung zu deaktivieren.

9. Sensor (1) nach Anspruch 8, wobei
der Sensor (1) dazu ausgebildet ist, die Zerstörung durch gezieltes Überlasten eines Schaltkreises des Sensors (1) zu erreichen.

10. Sensor (1) nach einem der Ansprüche 5 bis 9, wobei
am Gehäuse (11) ein Detektionsmittel vorgesehen ist, das dazu ausgebildet ist, das Öffnen des Gehäuses (11) zu detektieren.

11. Sensor (1) nach einem der vorstehenden Ansprüche, wobei
der Sensor (1) als Schutzmaßnahme dazu ausgebildet ist, zu erkennen, ob eine unbefugte Datenverbindung zu dem Sensor (1) aufgebaut ist oder wird.

12. Sensor (1) nach einem der vorstehenden Ansprüche, wobei
der Sensor (1) ein Winkelsensor ist und die über die Messschnittstelle (2) erfasste Messgröße eine Messgröße ist, die eine Drehbewegung eines drehbar vorgesehenen Elements (10) beschreibt, wobei das drehbar vorgesehene Element (10) insbesondere eine Lenksäule oder ein Element einer Fahrzeuglenkung aus dessen Drehbewegung ein Lenkwinkel ermittelt werden kann ist, oder wobei
der Sensor (1) ein Drehratensensor ist, wobei die über die Messschnittstelle (2) erfasste Messgröße insbesondere eine Gier-, Nick und/oder Rollrate eines Fahrzeugs ist, in dem der Sensor (1) vorgesehen ist, oder wobei
der Sensor (1) ein Beschleunigungssensor ist, wobei die über die Messschnittstelle (2) erfasste Messgröße eine Beschleunigung ist, oder wobei
der Sensor (1) ein Drucksensor ist, wobei die über die Messschnittstelle (2) erfasste Messgröße ein Druck ist, oder wobei
der Sensor (1) ein Kraftsensor ist, wobei die über die Messschnittstelle (2) erfasste Messgröße eine Kraft ist, oder wobei
der Sensor (1) ein Drehzahlsensor ist, wobei die über die Messschnittstelle (2) erfasste Messgröße eine Drehzahl ist, oder wobei
der Sensor (1) ein Positionssensor ist, wobei die über die Messschnittstelle (2) erfasste Messgröße insbesondere eine Position eines verfahrbaren Elements ist, oder wobei
der Sensor (1) ein Niveausensor ist, wobei die über die Messschnittstelle (2) erfasste Messgröße ein Niveau einer Fahrzeugkarosserie eines Fahrzeugs ist, in dem der Sensor (1) vorgesehen ist, oder wobei
der Sensor (1) ein Ölstandssensor ist, wobei die über die Messschnittstelle (2) erfasste Messgröße ein Ölstand ist.

13. Fahrzeug, insbesondere Nutzfahrzeug, mit einem Sensor (1) nach einem der Ansprüche 1 bis 12.
